(19) Europäisches Patentamt / European Patent Office / Office européen des brevets

(11) **EP 4 140 845 A1**

(12) **EUROPEAN PATENT APPLICATION**

(43) Date of publication:
01.03.2023  Bulletin 2023/09

(21) Application number: 22190582.1

(22) Date of filing: 16.08.2022

(51) International Patent Classification (IPC):
**B60W 60/00** (2020.01)  **G08G 1/01** (2006.01)
**G08G 1/16** (2006.01)

(52) Cooperative Patent Classification (CPC):
**G08G 1/166; B60W 60/0027; G08G 1/0129;**
**G08G 1/0145; G08G 1/096827; G08G 1/163;**
**G08G 1/164;** B60W 2520/105; B60W 2520/125;
B60W 2554/4041; B60W 2554/4042;
B60W 2554/406; B60W 2554/802; B60W 2555/60;
B60W 2556/10

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: 17.08.2021  CN 202110945481

(71) Applicant: **Beijing Baidu Netcom**
**Science Technology Co., Ltd.**
**Beijing 100085 (CN)**

(72) Inventors:
• **JIANG, Jianan**
  **Beijing, 100085 (CN)**
• **LIU, Xu**
  **Beijing, 100085 (CN)**
• **ZHOU, Jinyun**
  **Beijing,, 100085 (CN)**
• **DONG, Fangfang**
  **Beijing, 100085 (CN)**
• **WAN, Guowei**
  **Beijing, 100085 (CN)**

(74) Representative: **HGF**
**HGF Limited**
**1 City Walk**
**Leeds LS11 9DX (GB)**

(54) **METHOD AND APPARATUS FOR PREDICTING MOTION TRACK OF OBSTACLE AND AUTONOMOUS VEHICLE**

(57) The present disclosure provides a method and device for predicting a motion track of an obstacle and an autonomous vehicle, and relates to the technical field of autonomous driving, so as to at least solve the technical problem of low prediction precision of a motion track of an obstacle in an interaction scene. A specific implementation solution includes: environment information in a target scene, historical state information of a target obstacle and track planning information of a target vehicle are obtained, and the target obstacle is a potential interaction object of the target vehicle; and a motion track of the target obstacle is predicted based on the environment information, the historical state information and the track planning information.

Fig. 2

Obtain environment information in a target scene, historical state information of a target obstacle and track planning information of a target vehicle, where the target obstacle is a potential interaction object of the target vehicle — S20

Predict a motion track of the target obstacle based on the environment information, the historical state information and the track planning information — S22

## Description

Technical Field

The present disclosure relates to the technical field of autonomous driving, in particular to a method and apparatus for predicting a motion track of an obstacle and an autonomous vehicle.

Background

For smooth running of an autonomous vehicle, it is required to predict motion states of all obstacles around the autonomous vehicle, so that the autonomous vehicle can plan a safe and efficient driving track according to the predicted motion states of all the obstacles in a driving process of the autonomous vehicle.
In an existing solution, a prediction module of the autonomous vehicle may predict a motion track of each obstacle in isolation. However, in some complex interaction scenes, prediction precision may be reduced, easily causing a safety problem about vehicle running.

**Summary**

At least some embodiments of the present disclosure provides a method and apparatus for predicting a motion track of an obstacle and an autonomous vehicle, so as to at least solve the technical problem of low prediction precision of a motion track of an obstacle in an interaction scene in the related art.
In an embodiment of the present disclosure, a method for predicting a motion track of an obstacle is provided. The method includes that: environment information in a target scene, historical state information of a target obstacle and track planning information of a target vehicle are obtained, and the target obstacle is a potential interaction object of the target vehicle; and a motion track of the target obstacle is predicted based on the environment information, the historical state information and the track planning information.
In another embodiment of the present disclosure, an apparatus for predicting a motion track of an obstacle is provided. The device includes: an obtaining module configured to obtain environment information in a target scene, historical state information of a target obstacle and track planning information of a target vehicle, and the target obstacle is a potential interaction object of the target vehicle; and a prediction module configured to predict a motion track of the target obstacle based on the environment information, the historical state information and the track planning information.
In another embodiment of the present disclosure, an electronic device is provided. The electronic device includes: at least one processor; and a memory communicatively connected with the at least one processor; and the memory stores at least one instruction executable by the at least one processor, and the at least one instruction is executed by the at least one processor to make the at least one processor execute the method mentioned above.
In another embodiment of the present disclosure, a non-transitory computer-readable storage medium storing at least one computer instruction is provided. The at least one computer instruction is configured to make the computer execute the method mentioned above.
In another embodiment of the present disclosure, a computer program product is provided. The computer program product includes a computer program, where the computer program implements the method mentioned above when executed by a processor.
In another embodiment of the present disclosure, an autonomous vehicle is provided. The autonomous vehicle includes the above electronic device.
In the present disclosure, the environment information in the target scene, the historical state information of the target obstacle and the track planning information of the target vehicle are obtained, and the target obstacle is the potential interaction object of the target vehicle; and the motion track of the target obstacle is predicted based on the environment information, the historical state information and the track planning information, such that the objective of predicting the motion track of the obstacle by combining the environment information, the historical state information and the track planning information is achieved, and effects of accurately predicting the motion track of the obstacle and improving running safety and smoothness of the autonomous vehicle in the interaction scene is achieved, so as to solve the technical problem of low prediction precision of the motion track of the obstacle in the interactive scene in the related art.
It should be understood that what is described in this section is not intended to identify key or critical features of the embodiments of the present disclosure nor is it intended to limit the scope of the present disclosure. Other features of the present disclosure will become apparent from the following description.

**Brief Description of the Drawings**

The drawings serve for a better understanding of the solution and are not to be construed as limiting the present disclosure. In the drawings:

Fig. 1 is a structural diagram of hardware of a computer terminal (or mobile device) for implementing a method for predicting a motion track of an obstacle according to an embodiment of the present disclosure.

Fig. 2 is a flow chart of a method for predicting a motion track of an obstacle according to an embodiment of the present disclosure.

Fig. 3 is a structural diagram of an apparatus for predicting a motion track of an obstacle according to an embodiment of the present disclosure.

## Detailed Description

Exemplary embodiments of the present disclosure are described below in conjunction with the accompanying drawings, in which various details of the embodiments of the present disclosure are included to assist in understanding, and are to be regarded as exemplary. Therefore, those of ordinary skill in the art will recognize that various changes and modifications may be made to the embodiments described herein without departing from the scope and spirit of the present disclosure. Also, descriptions of well-known functions and constructions are omitted from the following description for clarity and conciseness.

It should be noted that the terms "first", "second" and so forth, in the description and claims of the present disclosure and in the above-mentioned drawings, are used for distinguishing between similar objects and not necessarily to describe a particular order or sequential order. It should be understood that the data used in this way may be interchanged where appropriate, such that the embodiments of the present disclosure described herein can be implemented in other sequences than those illustrated or described herein. In addition, terms "comprising", "having", and any variations thereof are intended to cover non-exclusive inclusions, for example, processes, methods, systems, products, or equipment that contains a series of steps or units need not be limited to those explicitly listed steps or units, but may include other steps or units not explicitly listed or inherent to these processes, methods, products, or devices.

In an existing solution, when predicting motion tracks of all obstacles in an environment in isolation, a prediction module of an autonomous vehicle generally uses the following three technologies: track prediction based on a physical model, track prediction based on an action sequence and track prediction based on data driving.

The track prediction technology based on a physical model mainly uses historical state information of the obstacle to predict a future motion track of the obstacle in combination with dynamics and kinematics models. Commonly used algorithms in the method include track extension based on a physical model, track prediction based on Gaussian noise and track prediction based on a Monte Carlo process. However, this prediction technology is suitable for a situation with a short prediction time domain, the prediction precision may be greatly reduced for motion track prediction in a longer time domain, and the prediction technology also may not process obstacles with a motion state suddenly changed.

According to the track prediction technology based on an action sequence, the motion track of the obstacle is regarded as a combination of a series of discrete motion behaviors, and the motion track of the obstacle is predicted by defining different motion modes in advance, combining historical state information of the obstacle, matching corresponding motion modes, and combining sampling and other methods. However, since generation of the discrete motion behaviors is coupled with environment information and a road topological relation, the prediction technology has strong dependence on scenes, and generalization ability of an algorithm is insufficient. A prediction effect tends to be influenced by the number of sampling tracks, the precision of a prediction result is influenced when the sampling number is insufficient, and calculation efficiency is reduced when the sampling number is excessive.

According to the track prediction technology based on data driving, a track prediction model is trained by combining a large amount of drive test data with a neural network and mainly by means of data driving methods, for example, machine learning, deep learning, etc., and the motion track of the obstacle is predicted by means of the prediction model. However, most prediction algorithms based on data driving predict obstacles in isolation, the influence of surrounding obstacles on the motion state of a target obstacle is not considered, and a prediction effect is not ideal in the interaction scene.

The motion track of the obstacle of the autonomous vehicle may not be predicted with high precision in the interaction scene in existing technical solutions. For example, in a vehicle meeting scene of a narrow road, an intersection staggered scene, etc., the prediction module does not consider the influence of the motion states among all obstacles in the surrounding environment, such that the prediction result has a large deviation from an actual position.

According to an embodiment of the present disclosure, a method for predicting a motion track of an obstacle is provided. It is to be noted that steps illustrated in the flowcharts of the accompanying drawings may be performable in a computer system such as a set of computer-performable instructions, and although a logical order is illustrated in the flowcharts, under some conditions, the steps shown or described may be performed in an order different from that herein.

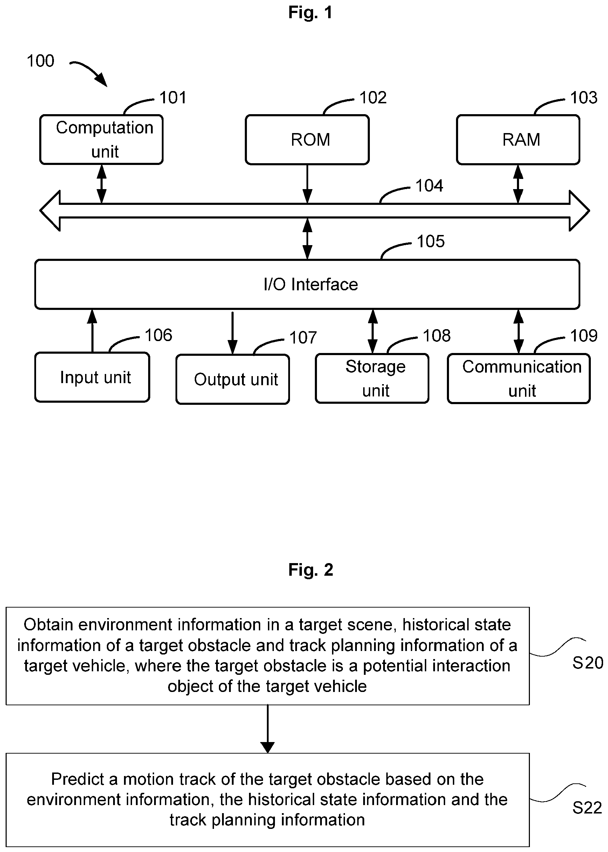

The method embodiment provided in the embodiment of the present disclosure may be executed in a mobile terminal, a computer terminal or a similar electric device. An electronic device is intended to represent various forms of digital computers, for example, laptops, desktops, workstations, personal digital assistants, servers, blade servers, mainframe computers, and other appropriate computers. The electronic device may also represent various forms of mobile devices, for example, personal digital processing, cellular telephones, smart phones, wearable devices, and other similar computing devices. Connections, relations, and their functions of the components shown here are meant to be examples, and are not meant to limit implementations of the present disclosure described and/or claimed therein. Fig. 1 shows a structural diagram of hardware of a computer terminal (or mobile device) for implementing a method for predicting a motion track of an obstacle according to an embodiment of the present disclosure.

As shown in Fig. 1, a computer terminal 100 includes a computation unit 101 that may perform various appropriate actions and processes in accordance with a computer program stored in a read only memory (ROM) 102 or a computer program loaded from a storage unit 108 into a random access memory (RAM) 103. In the RAM 103, various programs and data required for operation of the computer terminal 100 may also be stored. The computation unit 101, the ROM 102 and the RAM 103 are connected to each other by a bus 104. An input/output (I/O) interface 105 is also connected to the bus 104.

Multiple components in the computer terminal 100 are connected with the I/O interface 105 and includes: an input unit 106, for example, a keyboard, a mouse, etc.; an output unit 107, for example, various types of displays, speakers, etc.; a storage unit 108, for example, a magnetic disk, an optical disk, etc.; and a communication unit 109, for example, a network card, a modem, a wireless communication transceiver, etc. The communication unit 109 allows the computer terminal 100 to exchange information or data with other apparatuses by means of a computer network such as the Internet and/or various telecommunication networks.

The computation unit 101 may be a variety of general purpose and/or special processing assemblies having processing and computing capabilities. Some examples of the computation unit 101 include, but are not limited to, a central processing unit (CPU), a graphics processing unit (GPU), various special artificial intelligence (AI) computing chips, various computation units running a machine learning model algorithm, a digital signal processor (DSP), and any suitable processor, controller, microcontroller, etc. The computation unit 101 performs the method for predicting a motion track of an obstacle described herein. For example, in some embodiments, the method for predicting a motion track of an obstacle may be implemented as a computer software program tangibly embodied in a machine-readable medium, for example, the storage unit 108. In some embodiments, part or all of the computer program may be loaded and/or installed onto the computer terminal 100 by means of the ROM 102 and/or the communication unit 109. When the computer program is loaded into the RAM 103 and executed by the computation unit 101, at least one step of the method for predicting a motion track of an obstacle described herein may be performed. Alternatively, in other embodiments, the computation unit 101 may be configured by any other suitable means (for example, by means of firmware) to perform the method for predicting a motion track of an obstacle.

Various implementation modes of the systems and techniques described here may be implemented in a digital electronic circuit system, an integrated circuit system, a field programmable gate array (FPGA), an application specific integrated circuit (ASIC), an application specific standard product (ASSP), a system on a chip (SOC), a complex programmable logic device (CPLD), computer hardware, firmware, software, and/or combinations thereof. These various implementation modes may be implemented in at least one computer program which is executable and/or interpretable on a programmable system including at least one programmable processor, the programmable processor may be a special or general purpose programmable processor, data and instructions may be received from and transmitted to a storage system, at least one input device, and at least one output device.

It should be noted here that, in some optional embodiments, the electronic device shown in Fig. 1 described above may include a hardware element (including a circuit), a software element (including a computer code stored on a computer-readable medium), or a combination of both hardware and software elements. It should be noted that Fig. 1 is one example of a particular embodiment and is intended to illustrate the types of components that may be present in the electronic device described above.

In the above operating environment, an embodiment of the present disclosure provides a method for predicting a motion track of an obstacle as shown in Fig. 2, and the method may be performed by a computer terminal as shown in Fig. 1 or a similar electronic device. Fig. 2 is a flow chart of a method for predicting a motion track of an obstacle provided in an embodiment of the present disclosure. As shown in Fig. 2, the method may include the following steps.

In Step S20, environment information in a target scene, historical state information of a target obstacle and track planning information of a target vehicle are obtained.

The target obstacle is a potential interaction object of the target vehicle. For example, the target obstacle may be another vehicle that constitutes an obstacle to the target vehicle. The target vehicle may automatically determine the target obstacle in the target scene according to a specific selecting mode.

The target scene may be an interaction scene of the target vehicle in a driving process, for example, a vehicle meeting scene of a narrow road, an intersection staggered scene, etc. In these interaction scenes, due to geographical location limitations, mutual avoidance behaviors between vehicles and other factors, the motion track of the target obstacle tends to be influenced by subjective driving behaviors of a driver.

Optionally, environment information in the target scene, historical state information of the target obstacle and track planning information of the target vehicle may be obtained from a target electronic map.

The environment information in the target scene may include fixed environment data of a specific region in the target electronic map, for example, a road attribute, traffic light information, etc. The environment information in the target scene may further include real-time road information in the target electronic map, for example, road smoothness, real-time traffic flow, etc.

The historical state information of the target obstacle and the track planning information of the target vehicle may be obtained from a big data acquisition server of the target electronic map.

In Step S22, a motion track of the target obstacle is predicted based on the environment information, the historical state information and the track planning information.

Optionally, a neural network model may be used in combination with the environment information, the historical state information, and the track planning information to predict the motion track of the target obstacle, as described further in relation to embodiments of the present disclosure.

Optionally, a physical model may be used in combination with the environment information, the historical state information, and the track planning information to predict the motion track of the target obstacle. The physical model may be a kinetic model, a kinematic model, etc. Specifically, the motion track of the target obstacle may be predicted according to algorithms, for example, track extension based on a physical model, track prediction based on Gaussian noise, track prediction based on a Monte Carlo process, etc. in combination with the environment information, the historical state information and the track planning information.

Optionally, an action sequence may be used in combination with the environment information, the historical state information, and the track planning information to predict the motion track of the target obstacle. Specifically, the motion track of the target obstacle is regarded as a combination of a series of discrete motion behaviors, a corresponding mapping relation between the motion behavior combination and a motion mode is defined in advance, a corresponding motion mode is matched in combination with the environment information, the historical state information, and the track planning information, and the motion track of the target obstacle is predicted by combining sampling and other methods.

According to steps S20-S22 in the present disclosure, the environment information in the target scene, the historical state information of the target obstacle and the track planning information of the target vehicle are obtained, and the target obstacle is the potential interaction object of the target vehicle; and the motion track of the target obstacle is predicted based on the environment information, the historical state information and the track planning information, such that the objective of predicting the motion track of the obstacle by combining the environment information, the historical state information and the track planning information is achieved, and the effects of accurately predicting the motion track of the obstacle and improving running safety and smoothness of the autonomous vehicle in the interaction scene is achieved, so as to solve the technical problem of low prediction precision of the motion track of the obstacle in the interactive scene in the related art.

The above method of this embodiment is described further below.

As one optional implementation mode, the track planning information is used for planning a running route of the target vehicle in the target scene.

Optionally, the track planning information may be determined according to a navigation initial position and a final position of the target vehicle, and a road network topology. The navigation initial position of the target vehicle may be a position, obtained by a vehicle positioning apparatus, of the target vehicle at a current moment. The navigation final position of the target vehicle may be a final position manually input by a user or intelligently recognized by means of speech. The road network topology may be obtained from a target electronic map of a city where the target vehicle is located.

The track planning information may be displayed on a graphic display interface of a vehicle-mounted terminal or a mobile terminal, and may also be broadcast in speech to a user in combination with a broadcasting device.

As one optional implementation mode, the environment information includes at least one of road data, traffic light data, and obstacle data obtained by means of a target electronic map.

For example, the road data may include road smoothness, traffic flow and other information. The traffic light data may include the number, state and timing duration of traffic lights within a preset range in the target scene. The obstacle data may include real-time positions, driving speeds, etc. of vehicles around the target vehicle.

As one optional implementation mode, the historical state information includes: a historical speed and a historical position of the target obstacle.

As one optional implementation mode, the target obstacle is selected in at least one of the following ways. The target obstacle is selected based on a road attribute at a current position of the target vehicle. Or, the target obstacle is selected based on navigation information of the target vehicle, and the navigation information is a reference basis of the track planning information. Or, the target obstacle is selected based on a target lane to which the target vehicle is to change.

Optionally, the target obstacle may be searched by taking the target vehicle as a center and using at least one mode mentioned above.

For example, the target vehicle may obtain a road attribute of a current location, such as, a straight road and an intersection, and select an obstacle on this road as a target obstacle according to a preset first threshold.

For another example, the target vehicle may obtain navigation information and select an obstacle on a navigation path as a target obstacle according to a preset second threshold.

It should be noted that the first threshold and the second threshold may be safety distance values set by the user, and the first threshold and the second threshold may be adjusted by the user in real time.

For yet another example, in a lane changing process of the target vehicle, an obstacle on a target lane to which the target vehicle is to change may be selected as the target obstacle.

As one optional implementation mode, an operation of predicting the motion track of the target obstacle based on the environment information, the historical state information and the track planning information includes the following step. The environment information, the historical state information and the track planning information are analyzed by means of a neural network model to determine the motion track of the target obstacle. The neural network model is obtained by machine learning training of multiple sets of data, and each of the multiple sets of data includes: sample data and a predicted motion track of each obstacle.

The sample data includes environment information, historical state information and track planning information, and may also include other drive test data information.

As one optional implementation mode, the method for predicting the motion track of the obstacle further includes the following steps. A difference between a training result of the neural network model and target data is obtained in a process of training the neural network model. Weights of multiple parameters in a loss function corresponding to the neural network model are adjusted based on the difference between the training result and the target data.

The target data may be obtained by manually selecting test data collected by the target vehicle in various interaction scenes.

The loss function is mainly a function for mapping a value of a random event or a related random variable into a non-negative real number so as to represent the loss of the random event, and is mainly used as a criterion for neural model learning in practical use. That is, a neural network model is solved and evaluated by minimizing the loss function, and a probabilistic distribution difference between the training result and the target data may be quantified.

As one optional implementation mode, the multiple parameters include: a longitudinal acceleration of the target vehicle, a lateral acceleration of the target vehicle, and a relative distance between the target vehicle and the target obstacle.

A loss function corresponding to the neural network model provided in the present disclosure is shown as follows:

$$L = \sum_{j=0}^{N} \sum_{i=0}^{M} | C(\theta; \hat{\xi}_i) - C(\theta; \xi_j) + \delta |_{+} \qquad \text{(Equation 1)}$$

$$C = \theta_1 C_{acc} + \theta_2 C_{centripetal\_acc} + \theta_3 C_{collosion} \qquad \text{(Equation 2)}$$

$$C_{acc} = \sum_i a_i^2 \qquad \text{(Equation 3)}$$

$$C_{centripetal\_acc} = \frac{1}{Z_1} \sum_i (v_i^2 k_1)^2 \qquad \text{(Equation 4)}$$

$$C_{collosion} = \frac{1}{Z_2} \sum_i e^{-d_i^2} \qquad \text{(Equation 5)}$$

Equation 1 may be used for representing a process that the training result gradually approaches the target data. In Equation 1, L is a result obtained by subtracting the loss of the training result from the loss of the target data, $\theta$ is a dynamic weight coefficient, N is a total number of track points, M is a predicted number of tracks, $\hat{\xi}_i$ is track true value information of the target data, $\xi_j$ is track true value information of the training result, and $\delta$ is a regularization coefficient, such that over-fitting in the training process may be prevented.

Equation 2 is a basic equation for calculating data loss. In Equation 2, $C_{acc}$ is a longitudinal acceleration loss, $C_{centripetal\_acc}$ is a lateral acceleration loss, $C_{collusion}$ is a collision loss, $\theta_1$ is a dynamic weight of the longitudinal acceleration, $\theta_2$ is a dynamic weight of the lateral acceleration, and $\theta_3$ is a dynamic weight of the relative distance.

Equation 3 is a basic equation for calculating the longitudinal acceleration loss. In Equation 3, $a_i$ is an acceleration of a track point of the target vehicle at an ith moment.

Equation 4 is a basic equation for calculating the lateral acceleration loss, and in Equation 4, $Z_1$ is a normalization parameter, so as to guarantee the magnitude of all calculation values to be at one level. $V_i$ is a speed of the track point of the target vehicle corresponding to the ith moment, and $k_1$ is curvature of the track point of the target vehicle at the ith moment.

Equation 5 is a basic equation for calculating the collision loss. In Equation 5, $Z_2$ is a normalization parameter, so as to guarantee the magnitude of all calculation values to be at one level. e is a natural constant, and di corresponds to a relative distance between the target vehicle and the target obstacle at the ith moment.

The weights of the multiple parameters in the loss function may be repeatedly debugged in the training process to improve a training effect and iteration efficiency of the neural network model.

Optionally, the weights of the multiple parameters in the loss function may be automatically generated by machine learning. In a model coding process, the weight of each of the parameters is coded, an optimal weight coefficient may be obtained during neural network model training, and dynamic design of the weight may improve generalization ability of the neural network model along with increase of the target data and improvement of scene complexity. For example, in Scene 1, the weights corresponding to the parameters are a1, b1, and c1 respectively, and in Scene 2, the weights corresponding to the parameters are a2, b2, and c2 respectively.

In the present disclosure, the environment information in the target scene, the historical state information of the target obstacle and the track planning information of the target vehicle are obtained, and the target obstacle is the potential interaction object of the target vehicle; and the motion track of the target obstacle is predicted based on the environment information, the historical state information and the track planning information, such that the objective of predicting the motion track of the obstacle by combining the environment information, the historical state information and the track planning information is achieved, and the effects of accurately predicting the motion track of the obstacle and improving running safety and smoothness of the autonomous vehicle in the interaction scene is achieved, so as to solve the technical problem of low prediction precision of the motion track of the obstacle in the interactive scene.

In the technical solution of the present disclosure, the related processes, for example, collection, storage, use, processing, transmission, provision and present disclosure of personal information of a user meet the regulations of related laws and regulations, and do not violate the public order.

From the description of the above embodiments, it will be apparent to those skilled in the art that the methods according to the embodiments described above may be implemented by means of software plus a necessary general-purpose hardware platform, and of course may also be implemented by means of hardware, but in many cases the former is a better embodiment. Based on the understanding, the technical solution provided by the present disclosure may be embodied in a form of a software product in essence or a part contributing to the prior art, and the computer software product is stored in a storage medium, and includes multiple instructions for enabling a terminal device (for example, a mobile phone, a computer, a server or a network device) to execute the method of each embodiment of the present disclosure.

In another embodiment of the present disclosure, an apparatus for predicting a motion track of an obstacle is further provided. The apparatus is used for achieving the embodiment and the preferred implementation mode, and the content that has been described will not be repeated. The term "module", as used below, may achieve a combination of software and/or hardware with predetermined functions. While the apparatus described in the following embodiments is preferably achieved in software, it is possible and conceivable to achieve the device in hardware, or a combination of software and hardware.

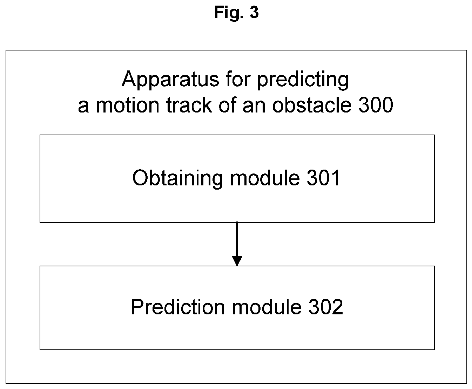

Fig. 3 is a structural diagram of an apparatus for predicting a motion track of an obstacle according to one embodiment of the present disclosure. As shown in Fig. 3, the apparatus 300 for predicting a motion track of an obstacle includes: an obtaining module 301 and a prediction module 302. The obtaining module 301 is configured to obtain environment information in a target scene, historical state information of a target obstacle and track planning information of a target vehicle, and the target obstacle is a potential interaction object of the target vehicle. The prediction module 302 is configured to predict a motion track of the target obstacle based on the environment information, the historical state information and the track planning information.

Optionally, the track planning information is used for planning a running route of the target vehicle in the target scene.

Optionally, the environment information includes at least one of road data, traffic light data, and obstacle data obtained by means of a target electronic map.

Optionally, the historical state information includes: a historical speed and a historical position of the target obstacle.

Optionally, the target obstacle is selected in at least one of the following ways: the target obstacle is selected based on a road attribute at a current position of the target vehicle; the target obstacle is selected based on navigation information of the target vehicle, wherein the navigation information is a reference basis of the track planning information; and the target obstacle is selected based on a target lane to which the target vehicle is to change.

Optionally, the prediction module 302 is configured to analyze the environment information, the historical state information and the track planning information by means of a neural network model to determine the motion track of the target obstacle, and the neural network model is obtained by machine learning training of multiple sets of data, and each of the multiple sets of data includes: sample data and a predicted motion track of each obstacle.

Optionally, the apparatus for predicting a motion track of an obstacle further includes a training module 303. The training module 303 is configured to obtain a difference between a training result of the neural network model and target data in a process of training the neural network model; and adjust, based on the difference between the training result and the target data, weights of multiple parameters in a loss function corresponding to the neural network model.

Optionally, the multiple parameters include: a longitudinal acceleration of the target vehicle, a lateral acceleration of the target vehicle, and a relative distance between the target vehicle and the target obstacle.

It should be noted that the various modules mentioned above may be achieved in software or hardware, achievement in hardware may be implemented as follows but are not limited thereto, the modules mentioned above are located in the same processor; or the modules mentioned above are separately located in different processors in any combination form.

According to another embodiment of the present disclosure, the present disclosure further provides an electronic device including a memory and at least one processor, and the memory is configured to store at least one computer instruction, and the processor is configured to run the at least one computer instruction to execute the above mentioned method embodiments.

Optionally, the electronic device may further include a transmission device and an input/output device. The transmission device is connected with the processor mentioned above and the input/output device is connected with the processor mentioned above.

Optionally, in the present disclosure, the processor above may be configured to perform the following steps by means of the computer program:

S1, environment information in a target scene, historical state information of a target obstacle and track planning information of a target vehicle are obtained; and

S2, a motion track of the target obstacle is predicted based on the environment information, the historical state information and the track planning information.

Optionally, specific examples in this embodiment may be referred to the examples described in the above-mentioned embodiments and optional implementation modes, which are not described in detail herein.

In another embodiment of the present disclosure, the present disclosure further provides a non-transitory computer-readable storage medium. The non-transitory computer-readable storage medium is configured to store at least one computer instruction, and the at least one computer instruction is configured to perform the above mentioned method embodiments at runtime.

Optionally, in this embodiment, the non-transitory computer-readable storage medium above may be configured to store the at least one computer program for performing the steps:

S1, environment information in a target scene, historical state information of a target obstacle and track planning information of a target vehicle are obtained; and

S2, a motion track of the target obstacle is predicted based on the environment information, the historical state information and the track planning information.

Optionally, in this embodiment, the non-transitory computer-readable storage medium above may include, but is not limited to, an electronic, magnetic, optical, electromagnetic, infrared, or semiconductor system, device, or apparatus, or any suitable combination of the foregoing. More specific examples of the readable storage medium may include an electrical connection based on at least one wire, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

In another embodiment of the present disclosure, a computer program product is further provided. Program codes for implementing an audio processing method in the present disclosure may be written in any combination of at least one programming language. These program codes may be provided for a processor or controller of a general purpose computer, a special purpose computer, or other programmable data processing apparatuses, such that the program codes, when executed by the processor or controller, make functions or operations specified in a flow chart and/or a block diagram implemented. The program codes may be executed entirely on a machine, partly on the machine, as a stand-alone software package partly on the machine and partly on a remote machine or entirely on the remote machine or server.

In another the embodiment of the present disclosure, an autonomous vehicle is further provided. The autonomous vehicle includes the electronic device in the above embodiment and may perform the method for predicting a motion track of an obstacle, such that the objective of predicting the motion track of the obstacle by combining the environment information, the historical state information and the track planning information is achieved, and the effects of accurately predicting the motion track of the obstacle and improving running safety and smoothness of the autonomous vehicle in the interaction scene is achieved, so as to solve the technical problem of low prediction precision of the motion track of the obstacle in the interactive scene in the related art.

The serial number of the embodiment of the present disclosure is used for description and does not represent the superiority or inferiority of the embodiments.

In the above embodiments of the present disclosure, the descriptions of various embodiments are emphasized on their respective aspects, and for portions of a certain embodiment that are not described in detail, reference may be made to the associated descriptions of other embodiments.

In several embodiments provided in the present disclosure, it should be understood that the disclosed technology may be implemented in other ways. The apparatus embodiments described above are illustrative, for example, a division of the units may be a division of logical functions, and in practice there may be additional ways of division, for example, multiple units or assemblies may be combined or integrated into another system, or some features may be ignored or not performed. Furthermore, mutual coupling or direct coupling or communication connection as shown or discussed may be an indirect coupling or communication connection by means of some interfaces, units or modules, and may be in an electrical form or other forms.

The units illustrated as separate components may be physically separate or not, and the components shown as units may be physical units or not, that is, may be located in one place, or may also be distributed over multiple units. Part or all of the units may be selected according to actual needs to achieve the objective of the solution of the embodiment.

In addition, each functional unit in each embodiment of the present disclosure may be integrated in one processing unit, or each unit may exist separately and physically, or at least two units may be integrated in one unit. The above integrated units may be implemented in a hardware form and may also be implemented in a form of software functional unit.

The integrated unit may be stored in a computer readable storage medium when implemented in the form of a software functional unit and sold or used as an independent product. Based on such understanding, the technical solution of the present disclosure may be embodied in the form of a software product in essence or a part contributing to the prior art or all or part of the technical solution, and the computer software product is stored in a storage medium and includes multiple instructions for making a computer device (which may be a personal computer, a server or a network device, etc.) perform all or part of the steps of the methods described in the various embodiments of the present disclosure. The foregoing storage medium includes: a USB flash disk, a read-only memory (ROM), a random access memory (RAM), a mobile hard disk, a magnetic disk, an optical disk and other media capable of storing program codes.

Embodiments described above are exemplary embodiments of the present disclosure, and it should be noted that several improvements and modifications may also be made by those of ordinary skill in the art without departing from the principles of the present disclosure, which should also be considered to fall within the scope of protection of the present disclosure.

## Claims

1. A method for predicting a motion track of an obstacle, comprising:

   obtaining (S20) environment information in a target scene, historical state information of a target obstacle and track planning information of a target vehicle, wherein the target obstacle is a potential interaction object of the target vehicle; and
   predicting (S22) a motion track of the target obstacle based on the environment information, the historical state information and the track planning information.

2. The method as claimed in 1, wherein the track planning information is used for planning a running route of the target vehicle in the target scene.

3. The method as claimed in 1, wherein the environment information comprises at least one of road data, traffic light data, and obstacle data obtained by means of a target electronic map.

4. The method as claimed in 1, wherein the historical state information comprises: a historical speed and a historical position of the target obstacle.

5. The method as claimed in 1, wherein the target obstacle is selected in at least one of the following ways:

   the target obstacle is selected based on a road attribute at a current position of the target vehicle;
   the target obstacle is selected based on navigation information of the target vehicle, wherein the navigation information is a reference basis of the track planning information; and
   the target obstacle is selected based on a target lane to which the target vehicle is to change.

6. The method as claimed in 1, wherein predicting the motion track of the target obstacle based on the environment information, the historical state information and the track planning information comprises:
   analyzing the environment information, the historical state information and the track planning information by means of a neural network model to determine the motion track of the target obstacle, wherein the neural network model is obtained by machine learning training of a plurality of sets of data, and each of the plurality of sets of data comprises: sample data and a predicted motion track of each obstacle.

7. The method as claimed in 6, further comprising:

   obtaining a difference between a training result of the neural network model and target data in a process of training the neural network model; and
   adjusting, based on the difference between the training result and the target data, weights of a plurality of parameters in a loss function corresponding to the neural network model.

8. The method as claimed in 7, wherein the plurality of parameters comprise:
   a longitudinal acceleration of the target vehicle, a lateral acceleration of the target vehicle, and a relative distance between the target vehicle and the target obstacle.

9. The method as claimed in 1, wherein the target scene is an interaction scene of the target vehicle in a driving process.

10. The method as claimed in 2, wherein the track planning information is determined according to a navigation initial position and a final position of the target vehicle, and a road network topology.

11. An apparatus for predicting a motion track of an obstacle, comprising:

   an obtaining module (301) configured to obtain environment information in a target scene, historical state information of a target obstacle and track planning information of a target vehicle, wherein the target obstacle is a potential interaction object of the target vehicle; and
   a prediction module (302) configured to predict a motion track of the target obstacle based on the environment information, the historical state information and the track planning information.

12. An electronic device, comprising: at least one processor; and a memory communicatively connected with the at least one processor; wherein the memory is configured to store at least one instruction executable by the at least one processor, and the at least one instruction is executed by the at least one processor to make the at least one processor execute the method as claimed in any one of claims 1-10.

13. A non-transitory computer-readable storage medium storing at least one computer instruction, wherein the at least one computer instruction is configured to make a computer execute the method as claimed in any one of claims 1-10.

14. A computer program product, comprising a computer program, wherein the computer program implements the method as claimed in any one of claims 1-10 when executed by a processor.

15. An autonomous vehicle, comprising the electronic device as claimed in claim 12.

**Fig. 1**

100

| | | |
|---|---|---|
| Computation unit 101 | ROM 102 | RAM 103 |

104

I/O Interface 105

| Input unit 106 | Output unit 107 | Storage unit 108 | Communication unit 109 |
|---|---|---|---|

**Fig. 2**

Obtain environment information in a target scene, historical state information of a target obstacle and track planning information of a target vehicle, where the target obstacle is a potential interaction object of the target vehicle — S20

Predict a motion track of the target obstacle based on the environment information, the historical state information and the track planning information — S22

**Fig. 3**

Apparatus for predicting
a motion track of an obstacle 300

Obtaining module 301

Prediction module 302

Europäisches
Patentamt

European
Patent Office

Office européen
des brevets

# EUROPEAN SEARCH REPORT

Application Number

EP 22 19 0582

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 190 427 B (BEIJING SANKUAI ONLINE TECH CO LTD) 2 October 2020 (2020-10-02) * paragraphs [0071], [0056], [0070], [0109] – [0110], [0060] – [0061], [0065], [0064], [0058] – [0059], [0002], [0102] – paragraphs [0073] – [0078], [0082] – [0086], [0095] – [0100] * | 1-15 | INV. B60W60/00 G08G1/01 G08G1/16 |
| A | CN 111 912 423 A (BEIJING SANKUAI ONLINE TECH CO LTD) 10 November 2020 (2020-11-10) * paragraphs [0121], [0124] – [0127], [0132] * | 1-15 | |
| A | CN 111 114 543 B (BEIJING SANKUAI ONLINE TECH CO LTD) 3 July 2020 (2020-07-03) * paragraphs [0131] – [0134] * | 1-15 | |
| A | CN 113 128 381 A (GEELY HOLDING GROUP CO LTD ET AL.) 16 July 2021 (2021-07-16) * paragraphs [0058] – [0059] * | 1-15 | TECHNICAL FIELDS SEARCHED (IPC) |
| A | CN 110 371 112 A (SHENZHEN SHUXIANG TECH CO LTD) 25 October 2019 (2019-10-25) * page All * | 1-15 | B60W G08G |
| A | CN 111 572 562 A (TENCENT TECH SHENZHEN CO LTD) 25 August 2020 (2020-08-25) * paragraph [0076] * | 1-15 | |
| A | CN 111 428 943 A (FREETECH INTELLIGENT SYSTEMS CO LTD) 17 July 2020 (2020-07-17) * paragraph [0066] * | 1-15 | |
| A | US 2020/262448 A1 (LI HONGYE [CN] ET AL) 20 August 2020 (2020-08-20) * paragraph [0062] * | 1-15 | |

The present search report has been drawn up for all claims

| Place of search | Date of completion of the search | Examiner |
|---|---|---|
| The Hague | 12 January 2023 | Fernández Santiago |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 0582

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2023

| Patent document cited in search report | | | Publication date | Patent family member(s) | | | Publication date |
|---|---|---|---|---|---|---|---|
| CN 111190427 | B | | 02-10-2020 | NONE | | | |
| CN 111912423 | A | | 10-11-2020 | CN | 111912423 | A | 10-11-2020 |
| | | | | CN | 112629550 | A | 09-04-2021 |
| CN 111114543 | B | | 03-07-2020 | NONE | | | |
| CN 113128381 | A | | 16-07-2021 | NONE | | | |
| CN 110371112 | A | | 25-10-2019 | NONE | | | |
| CN 111572562 | A | | 25-08-2020 | NONE | | | |
| CN 111428943 | A | | 17-07-2020 | NONE | | | |
| US 2020262448 | A1 | | 20-08-2020 | CN | 109739246 | A | 10-05-2019 |
| | | | | EP | 3699055 | A1 | 26-08-2020 |
| | | | | JP | 7090114 | B2 | 23-06-2022 |
| | | | | JP | 2020135885 | A | 31-08-2020 |
| | | | | KR | 20200101858 | A | 28-08-2020 |
| | | | | KR | 20220070194 | A | 30-05-2022 |
| | | | | US | 2020262448 | A1 | 20-08-2020 |

EPO FORM P0459

For more details about this annex : see Official Journal of the European Patent Office, No. 12/82